# FASCICULE DE BREVET EUROPEEN

(11) **EP 1 387 005 B1**
(45) Date de publication et mention de la délivrance du brevet: **05.07.2006**
(21) Numéro de dépôt: 03291933.4
(22) Date de dépôt: 31.07.2003
(51) Int. Cl.: E01C 7/18, C04B 20/04

(54) **Enrobé coulé à froid et couche de roulement d'un revêtement routier réalisée avec un tel enrobé**
Kalt aufgebrachtes Mischgut und Deckschicht eines Strassenbelages mit solchem Mischgut
Cold spread pavement material and road surface with such pavement material

(30) Priorité: 02.08.2002 FR 0209902
(43) Date de publication de la demande: 04.02.2004
(73) Titulaire: COLAS S.A., 92653 Boulogne-Billancourt Cédex (FR)
(72) Inventeur: Chambon, Alain, 69390 Vourles (FR)
(74) Mandataire: Michelet, Alain

(56) Documents cités:
- DE-A- 1 459 685
- DE-A- 19 903 314
- FR-A- 2 384 064
- FR-A- 2 815 628
- US-A- 1 549 656

## Description

L'invention concerne un enrobé coulé à froid et une couche de roulement réalisée avec un tel enrobé.

Les couches de roulement des chaussées, quelles soient réalisées avec des enduits, des enrobés chauds, des enrobés coulés à froid ou d'autres produits, doivent assurer la sécurité des usagers par un contact pneu-chaussée le plus performant possible, même dans des conditions de circulation difficiles et dans toutes les conditions climatiques.

Pour répondre aux besoins des usagers et notamment pour assurer leur sécurité, les revêtements des chaussées doivent donc permettre une bonne adhérence des véhicules sur les chaussées, notamment des chaussées sinueuses, par temps sec et par temps pluvieux. Ces qualités doivent être durables.

L'adhérence recherchée provient de la capacité des revêtements des chaussées à générer des forces de frottement au contact des pneus avec la chaussée dans différentes situations de conduite, telles que des accélérations, des freinages, des virages ou des manoeuvres d'évitement. Alors que le niveau d'adhérence est en général satisfaisant sur des chaussées sèches, sauf cas exceptionnels tels que des salissures accidentelles, l'adhérence est réduite lorsque les chaussées sont humides ou mouillées. Ceci est principalement du à la présence d'eau entre les pneus et la surface de la chaussée.

Pour assurer une bonne adhérence des pneus sur la chaussée, la surface de la chaussée doit être géométriquement conçue de façon à permettre une bonne évacuation de l'eau, et de rompre le film d'eau restant en un endroit donné lors du passage du pneu sur cet endroit de la chaussée. De plus, la structure de la surface de la chaussée doit être choisie de façon à éviter toute dégradation de l'adhérence par le colmatage des espaces formés entre les éléments définissant la structure de surface de la chaussée. En même temps, la structure et la rugosité de la surface de la chaussée ne doivent produire une usure prématurée des pneus.

Le document DE-A-1459685 décrit un enrobé coulé à froid pour revêtement de chaussée bitumineux comprenant des gravillons dont une partie peut être du corindon. Ce document prévoit le remplacement des agrégats courants par des gravillons de dureté accrue et de même granulométrie.

Le but de l'invention est de proposer un enrobé coulé à froid permettant de réaliser une couche de roulement ou une surface d'un revêtement routier de telle façon que l'adhérence des pneus sur la chaussée soit améliorée par rapport au revêtement habituel.

Le but de l'invention est atteint par un enrobé selon la revendication 1, et une couche de roulement selon la revendication 11.

Conformément à l'invention, les gravillons, obtenus par transformation industrielle d'une matière rocheuse, présentent un coefficient de polissage accéléré, mesuré selon la norme française P 18-575, égal ou supérieur à 0,58.

Les gravillons obtenus ont des caractéristiques intrinsèques élevées dont les valeurs évoluent le moins possible dans le temps et sous l'agression du trafic.

De préférence, la matière rocheuse est un minerai d'aluminium.

Les minerais d'aluminium préférés sont la bauxite, l'alumine et leurs mélanges, tout particulièrement la bauxite.

La transformation industrielle comprend un traitement du minerai qui résulte en un accroissement de la dureté de ce minerai, tout particulièrement un traitement thermique de durcissement du minerai.

La qualité du contact d'un pneu avec une chaussée est caractérisée par le coefficient de polissage accéléré, appelé ci-après CPA. Ce coefficient, qui représente une qualité des gravillons, est mesuré à des intervalles réguliers pour surveiller l'évolution de cette caractéristique.

D'autres caractéristiques physiques du revêtement sont également mesurées et surveillées. Parmi elles figurent la macrorugosité mesurée selon la norme NF P 98-216-1 (Essais relatifs aux chaussées - Détermination de la manotexture - Partie 1 : Essai de hauteur au sable vraie (HSv)), le coefficient de frottement longitudinal (CFL) mesuré selon la norme NF P 98-220-2 (Essais relatifs aux chaussées - Essais liés à l'adhérence - Partie 2 : Méthode permettant d'obtenir un coefficient de frottement longitudinal) et le coefficient de frottement transversal (CFT) mesuré selon la norme NF P 98-220-3 (Essai relatif aux chaussées - Essais liés à l'adhérence - Partie 3 : Méthode permettant de mesurer le coefficient de frottement transversal entre un pneumatique de véhicule et la chaussée). Alors que la première concerne les caractéristiques physiques sur un laps de temps assez long, on choisit des matériaux de roche massive et on les soumet à une transformation industrielle, notamment à un concassage, pour obtenir des gravillons présentant de tous les côtés des arêtes coupantes et une rugosité suffisante pour assurer à long terme des coefficients de frottement longitudinal et transversal élevés. La roche est choisie de façon que les arêtes des gravillons résultant du concassage soient maintenues le plus longtemps possible.

Pour obtenir un matériau ayant un ensemble de caractéristiques physiques améliorées par rapport à cette combinaison de l'état naturel, on associe des matériaux ayant une caractéristique de micro-rugosité la plus élevée possible, comme les bauxites calcinées, on crée une formulation de l'enrobé coulé à froid assurant que le maximum de ces matériaux présents dans la chaussée soit en contact avec le pneu pour assurer une bonne adhérence du véhicule sur la chaussée et on réalise ce mélange avec un liant à base d'une émulsion de bitume de haute performance.

Les gravillons préférentiellement utilisés selon l'invention sont des bauxites calcinées d'une granulométrie ne dépassant pas 6 mm, de préférence 1/3 et/ou 3/6. La dureté des gravillons, mesurée selon la norme française P 18-573 « essai Los Angeles », est inférieure ou égale à 15 et l'usure des gravillons, mesurée selon la norme française P 18-572 «l'essai d'usure micro-Deval» (MDE) est inférieure ou égale à 12.

Pour assurer que le maximum des gravillons sont en contact avec le pneu, l'enrobé coulé à froid est appliqué en couche fine, son épaisseur correspondant approximativement au plus gros calibre des gravillons. L'enrobé selon l'invention est appliqué à raison de 6 à 12 kg/m² résultant en une épaisseur de couche de l'ordre de respectivement 3 ou 6 mm en fonction des sollicitations prévisibles.

Afin que chacun des gravillons soit solidement attaché à la couche de revêtement sur laquelle l'enrobé coulé à froid selon l'invention est épandu, on utilise un liant à base d'une émulsion de bitume de haute performance, notamment une émulsion de bitume modifiée par un ou plusieurs élastomères et plus particulièrement par du styrène-butadiène-styrène (SBS) de toute origine. Cet adjuvant est ajouté à l'émulsion de bitume à raison de 15 à 70 kg par tonne d'émulsion, par exemple à raison de 40 kg par tonne d'émulsion. Les émulsions de bitume selon l'invention contiennent en général de 60 à 70% en poids de bitume, le reste étant constitué par de l'eau et des additifs éventuels.

Pour optimiser la mise en place de l'enrobé, l'enrobé coulé à froid selon l'invention peut comprendre au moins un additif, minéral ou organique, par exemple des fibres de verre. Ces additifs améliorent la cohésion et la résistance à l'arrachement des gravillons de l'enrobé coulé à froid.

Généralement l'enrobé coulé à froid selon l'invention comprend de 50 à 70% en poids de gravillons et de 50 à 30% de sable par rapport au poids total de gravillons et de sable dans l'enrobé.

La teneur en liant est généralement comprise entre 10 et 13 parties en poids pour 100 parties en poids de gravillons et de sable.

L'invention est également atteinte par une couche de roulement de revêtement routier réalisée avec un enrobé coulé à froid tel que décrit ci-avant.

Lorsque l'enrobé selon l'invention est épandu, différents essais sont effectués peu de temps après son épandage et ensuite à des intervalles réguliers, par exemple tous les ans, de préférence à la même époque de l'année, pour surveiller l'évolution du revêtement routier. Le coefficient de polissage accéléré doit être supérieur à 0,58 et avoir de préférence des valeurs allant jusqu'à 0,85.

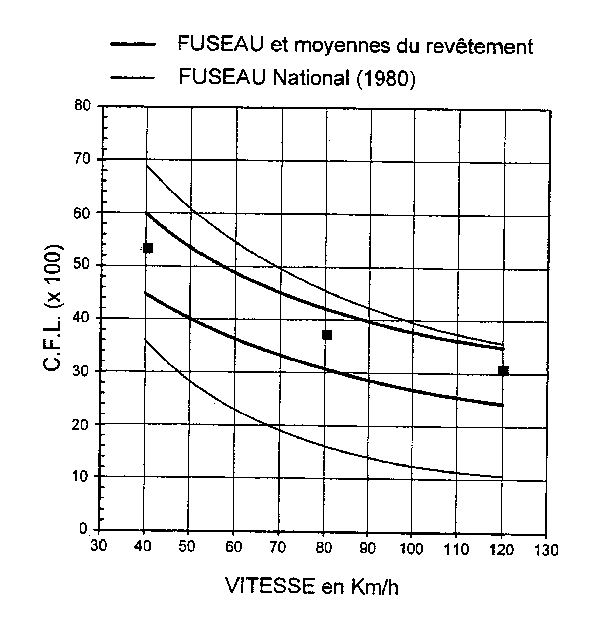

Les coefficients de frottement latéral et transversal doivent être dans la partie haute du fuseau national dont les caractéristiques dépendent de la vitesse à laquelle la mesure est effectuée, du type de circulation et du type de revêtement choisi même et au-delà de cette partie haute du fuseau. Ces coefficients ne devraient pas perdre plus de 20% de leur valeur d'origine dans un laps de temps de 5 ans. Un exemple d'un tel fuseau est représenté sur la figure unique annexée .

Par rapport aux techniques antérieurement utilisées, l'enrobé selon l'invention est parmi les plus performants et coûte moins cher que des produits classiques ayant des performances équivalentes. Son rapport qualité prix est donc le meilleur. Sa mise en oeuvre se réalise avec le matériel traditionnel de la technique des enrobés coulés à froid. Si le support est très déformé, il faut le préparer afin que la surface du revêtement soit la plus homogène possible pour ne pas gaspiller l'enrobé selon l'invention par des surépaisseurs.

L'enrobé coulé à froid selon l'invention peut présenter l'une ou l'autre des caractéristiques suivantes, considérées isolément ou en toute combinaison techniquement possible dans le cadre défini par la revendication 1:
- le liant est formulé de manière à ne pas faire perdre aux gravillons leur porosité ; ceci est obtenu par une formulation évitant des remontées de liant ;
- la performance du liant est telle que les gravillons soient fortement fixés sur le support afin de résister aux forces d'accélération horizontales ;
- le CFL, mesuré à 40 km/h est supérieur à 0,65 ;
- le CFT, mesuré à 60 km/h est supérieur ou égal à 0,80 ;
- HSv est supérieur à 0,8 et inférieur à 1.4 ;
- le sable est utilisé uniquement comme filler d'où sa granulométrie très inférieure à celle des gravillons, par exemple à 0/1 ou 0/2 ;
- l'enrobé comprend uniquement des gravillons ayant la même haute qualité pour assurer un contact homogène avec les pneus et pour assurer ainsi la haute adhérence des pneus sur la couche de roulement réalisée avec ledit enrobé coulé à froid.

L'enrobé selon l'invention présente l'avantage, par rapport à d'autres produits ayant des performances équivalentes, d'être réalisé avec un matériel traditionnel et un liant traditionnel et notamment en absence de toute résine. Ainsi, cet enrobé coulé à froid est moins cher que les autres produits. De plus, l'enrobé coulé à froid selon l'invention est préparé avec le matériel traditionnel de ce domaine et ne demande pas de formation spécifique du personnel.

## Revendications

1. Enrobé coulé à froid constitué de gravillons, de sable, d'un liant à base d'une émulsion de bitume, et éventuellement d'un additif, minéral ou organique améliorant la cohésion et la résistance à l'arrachement des gravillons, dans lequel les gravillons sont des gravillons obtenus par transformation industrielle d'une matière rocheuse comprenant un traitement d'un minerai résultant en un accroissement de la dureté de ce minerai et un concassage, et les gravillons présentent un coefficient de polissage accéléré, mesuré selon la norme française P 18-575, égal ou supérieur à 0,58, ces gravillons ont une granulométrie égale ou inférieure à 6, et représentent 50 à 70% en poids par rapport au poids total de gravillons et de sable, le sable a une granulométrie égale ou inférieure à 2, et le sable a une granulométrie très inférieure à celle des gravillons, et représente 50 à 30% en poids par rapport au poids total de gravillons et de sable, et la teneur en liant est comprise entre 10 et 13 parties en poids pour 100 parties en poids de gravillons et de sable.

2. Enrobé coulé à froid selon la revendication 1, **caractérisé en ce que** la dureté des gravillons, mesurée selon l'essai « Los Angeles », est inférieure ou égale à 15.

3. Enrobé coulé à froid selon la revendication 1 ou 2, **caractérisé en ce que** l'usure des gravillons, mesurée selon le « Essai d'usure micro-Deval », est inférieure ou égale à 12.

4. Enrobé coulé à froid selon l'une quelconque des revendications précédentes, **caractérisé en ce que** le liant est une émulsion bitumineuse modifiée par un ou plusieurs élastomères.

5. Enrobé coulé à froid selon la revendication 4, **caractérisé en ce que** l'élastomère est un styrène-butadiène-styrène.

6. Enrobé coulé à froid selon la revendication 4 ou 5, **caractérisé en ce que** le ou les élastomères représentent de 15 à 70 kg par tonne d'émulsion.

7. Enrobé coulé à froid selon l'une quelconque des revendications précédentes, **caractérisé en ce que** la matière rocheuse est un minerai.

8. Enrobé coulé à froid selon la revendication 7, **caractérisé en ce que** le minerai est un minerai d'aluminium.

9. Enrobé coulé à froid selon la revendication 8, **caractérisé en ce que** le minerai d'aluminium est choisi parmi la bauxite, l'alumine et leurs mélanges, de préférence la bauxite.

10. Enrobé selon l'une quelconque des revendications 7 à 9, **caractérisé en ce que** la transformation industrielle comporte un traitement thermique de durcissement du minerai.

11. Couche de roulement d'un revêtement routier réalisée avec un enrobé coulé à froid selon l'une quelconque des revendications 1 à 10, l'enrobé étant appliqué à raison de 6 à 12 kg/m².

## Claims

1. A cold spread pavement material formed of grit, sand, a bituminous emulsion-based binder, and possibly a mineral or organic additive, improving the cohesion and the tear resistance of the grit, wherein the grit is obtained by industrial transformation of a rocky material comprising the treatment of an ore resulting from an increase in hardness of said ore and a crushing operation, and the grit exhibiting an accelerated polishing coefficient, measured according to the French standard P 18-575, greater than or equal to 0.58, such grit has a size distribution smaller than or equal to 6, and accounts for 50 to 70 % in weight relative to the total weight of grit and of sand, the sand has a size distribution smaller than or equal to 2, and the sand has a size distribution much smaller than that of the grit, and accounts for 50 to 30 % in weight relative to the total weight of grit and of sand, and the binder content ranges between 10 and 13 parts in weight for 100 parts in weight of grit and sand.

2. A cold spread pavement material according to claim 1, **characterised in that** the hardness of the grit, measured according the "Los Angeles" test, is smaller than or equal to 15.

3. A cold spread pavement material according to claim 1 or 2, **characterised in that** the wear of the grit, measured according to the 'Micro-Deval wear test' is smaller than or equal to 12.

4. A cold spread pavement material according to any one of the previous claims, **characterised in that** the binder is a bituminous emulsion modified by one or several elastomers.

5. A cold spread pavement material according to claim 4, **characterised in that** the elastomer is a styrene-butadiene-styrene.

6. A cold spread pavement material according to claim 4 or 5, **characterised in that** the elastomer(s) account for 15 to 70 kg per ton of emulsion.

7. A cold spread pavement material according to any one of the previous claims, **characterised in that** the rocky material is an ore.

8. A cold spread pavement material according to claim 7, **characterised in that** the ore is an aluminium ore.

9. A cold spread pavement material according to claim 8, **characterised in that** the aluminium ore is selected among bauxite, alumina and the mixtures thereof, preferably bauxite.

10. A cold spread pavement material according to any one of claims 7 to 9, **characterised in that** the industrial transformation includes a hardening thermal treatment of the ore.

11. A road surface made with a cold spread pavement material according to any one of claims 1 to 10, the pavement material being applied at the ratio of 6 to 12 kg/m².

## Patentansprüche

1. Kalt aufgebrachtes Mischgut bestehend aus Kies, Sand, einem Bindemittel auf der Basis einer Bitumenemulsion und eventuell einem Zusatzstoff, mineralisch oder organisch, der die Kohäsion und die Abrissfestigkeit des Kieses verbessert, bei dem der Kies Kies ist, der durch industrielle Umformung eines Gesteinsstoffs erzielt wird, die eine Behandlung eines Erzes umfasst, die zu einem Steigern der Härte dieses Erzes führt, und ein Brechen, und wobei der Kies einen beschleunigten Polierkoeffizienten gemessen gemäß der französischen Norm P 18-575 gleich oder größer 0,58 aufweist, wobei dieser Kies eine Granulometrie gleich oder kleiner 6 hat und 50 bis 70 %-Gew. im Vergleich zum Gesamtgewicht des Kieses und Sands aufweist, der Sand eine Granulometrie gleich oder kleiner 2 hat und der Sand eine Granulometrie stark unter der des Kieses hat, und 50 bis 30 %-Gew. in Bezug auf das Gesamtgewicht des Kieses und des Sands darstellt, und wobei der Gehalt an Bindemittel zwischen 10 und 13 Gewichtsanteilen für 100 Gewichtsanteile Kies und Sand liegt.

2. Kalt aufgebrachtes Mischgut nach Anspruch 1, **dadurch gekennzeichnet, dass** die Härte des Kieses gemessen gemäß dem "Los Angeles"-Versuch kleiner oder gleich 15 ist.

3. Kalt aufgebrachtes Mischgut nach Anspruch 1 oder 2, **dadurch gekennzeichnet, dass** die Abnutzung des Kieses gemessen gemäß dem "Mikro-Deval-Abnutzungsversuch" kleiner oder gleich 12 ist.

4. Kalt aufgebrachtes Mischgut nach einem der vorhergehenden Ansprüche, **dadurch gekennzeichnet, dass** das Bindemittel eine durch einen oder mehrere Elastomere modifizierte Bitumenemulsion ist.

5. Kalt aufgebrachtes Mischgut nach Anspruch 4, **dadurch gekennzeichnet, dass** der Elastomer ein Styrol-Butadien-Styrol ist.

6. Kalt aufgebrachtes Mischgut nach Anspruch 4 oder 5, **dadurch gekennzeichnet, dass** der oder die Elastomere 15 bis 70 kg pro Tonne Emulsion darstellen.

7. Kalt aufgebrachtes Mischgut nach einem der vorhergehenden Ansprüche, **dadurch gekennzeichnet, dass** der Gesteinsstoff ein Erz ist.

8. Kalt aufgebrachtes Mischgut nach Anspruch 7, **dadurch gekennzeichnet, dass** das Erz ein Aluminiumerz ist.

9. Kalt aufgebrachtes Mischgut nach Anspruch 8, **dadurch gekennzeichnet, dass** das Aluminiumerz ausgewählt wird aus Bauxit, Alumin und ihren Gemischen, vorzugsweise Bauxit.

10. Gemisch nach einem der Ansprüche 7 bis 9, **dadurch gekennzeichnet, dass** die industrielle Umformung eine Wärmebehandlung zum Härten des Erzes umfasst.

11. Fahrbahndeckenschicht einer Straßenbeschichtung hergestellt mit einem kalt aufgebrachten Mischgut nach einem der Ansprüche 1 bis 10, wobei das Mischgut zu 6 bis 12 kg/m² aufgebracht wird.
